(19) Europäisches Patentamt / European Patent Office / Office européen des brevets

(11) **EP 2 243 542 A1**

(12) **EUROPEAN PATENT APPLICATION**

(43) Date of publication:
27.10.2010 Bulletin 2010/43

(51) Int Cl.:
*B01D 65/08* (2006.01)    *B01D 61/24* (2006.01)

(21) Application number: **09158751.9**

(22) Date of filing: **24.04.2009**

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicant: **Nederlandse Organisatie voor Toegepast -Natuurwetenschappelijk Onderzoek TNO 2628 VK Delft (NL)**

(72) Inventors:
• **Goetheer, Earl Lawrence Vincent**
  **4554 CP Westdorpe (NL)**
• **de Bruin, Johannes**
  **1065 CA Amsterdam (NL)**

(74) Representative: **Hatzmann, Martin et al**
**Vereenigde**
**Johan de Wittlaan 7**
**2517 JR Den Haag (NL)**

(54) **Absorption process using a membrane**

(57)    Object of the present invention is to provide a membrane absorption and permeation method which facilitates absorption into the absorption liquid. In a first aspect this object is met by transferring at least one compound from a feed stream to an absorption liquid stream comprising:
- feeding said feed stream to a feed stream compartment of a membrane unit;
- feeding said absorption liquid stream to an absorption liquid compartment of said membrane unit;
- wherein in said membrane unit said feed stream compartment and said absorption liquid compartment are separated by a membrane;
- wherein said absorption liquid flows through said absorption liquid compartment in a direction that is essentially parallel to said membrane;
- wherein the residence time of said absorption liquid in said membrane unit is $\tau$; wherein $\tau = V/\varphi_v$, wherein $V$ is the volume of said absorption liquid compartment and $\varphi_v$ is the volumetric flow rate of said absorption liquid stream; and
- wherein for a duration less than $\tau$ the flow direction of said absorption liquid is changed.

EP 2 243 542 A1

**Description**

The invention is directed to a method for absorbing compounds from a first fluid, through a membrane into a second fluid.

Membrane gas absorption (MGA) makes use of a non-selective gas-permeable porous membrane for the transfer of compounds between a gas and an aqueous liquid, referred to as the absorption liquid. The membrane forms a gas-permeable barrier between a liquid and a gas. Compounds diffuse through the pores of the membrane and are absorbed by a suitable liquid called the absorption liquid.

Pertraction is the extraction of a compound through a non-selective porous membrane from a first liquid into a second liquid. The second liquid is referred to as the absorption liquid. This method is based on the relative solubility of the compound in the two liquids. The two liquids, usually water and an organic solvent, are separated from each other by the membrane. The membrane may be suitably chosen such that it allows the first liquid to penetrate through, while rejecting the absorption liquid. The compounds to be extracted may diffuse through the membrane and are absorbed by the absorption liquid.

It is known in the art that the absorption of a compound into an absorption liquid can be facilitated by mixing of said absorption liquid.

For example Krantz et al. (Journal of Membrane Science 124 (1997) 283-299) describe the use of axial vibrations of a membrane tube bundle to increase oxygen transfer to a liquid flow. This method works because of the increased mixing of the liquid flow as a result of the vibrations. Disadvantage of this method is that only a few systems in industry can withstand vibrations as described by Krantz *et. al.* Also, using vibrations may cause damage to the membrane and/or other parts of the absorption system, especially when these vibrations are exerted over a long period of time. Furthermore installing and operating vibrating means to industrial scale apparatuses is cumbersome and prone to malfunction.

WO-A-2005/028085 describes a method for cleaning membranes in filtration systems using backwashing. Backwashing uses a reversed flow of fluid across the membrane, *viz.* through the membrane pores, to dislodge any fouling materials on the membrane. Such a reversed flow through the membrane is not possible in membrane absorption methods and can therefore not be used for facilitating absorption in such methods.

Object of the present invention is to provide a membrane absorption and permeation method which facilitates absorption into the absorption liquid, and which overcomes at least in part one or more of the above-mentioned disadvantages of the prior art.

In a first aspect this object is met by a process comprising transferring at least one compound from a feed stream to an absorption liquid stream, said process further comprising:

- feeding said feed stream to a feed stream compartment of a membrane unit;
- feeding said absorption liquid stream to an absorption liquid compartment of said membrane unit;
- wherein in said membrane unit said feed stream compartment and said absorption liquid compartment are separated by a membrane;
- wherein said absorption liquid flows through said absorption liquid compartment in a direction that is essentially parallel to said membrane;
- wherein the residence time of said absorption liquid in said membrane unit is $\tau$; wherein $\tau = V/\varphi_v$, wherein V is the volume of said absorption liquid compartment and $\varphi_v$ is the volumetric flow rate of said absorption liquid stream; and
- wherein for a duration less than $\tau$ the flow direction of said absorption liquid is changed.

The inventors surprisingly found that the process of the present invention has a considerable higher efficiency as compared to a process in which the flow direction is not changed. By result a considerable lower membrane surface area suffices for obtaining the same separation characteristics. This results in more compact design and saving of costs.

Furthermore, it is believed that the extra energy needed for changing the flow direction of the absorption liquid is much smaller than the energy saved from obtainingan increased mass transfer.

The mass transfer is usually expressed by the symbol k, generally expressed in $kg/(s \cdot m^2)/(kg/m^3)$, or m/s

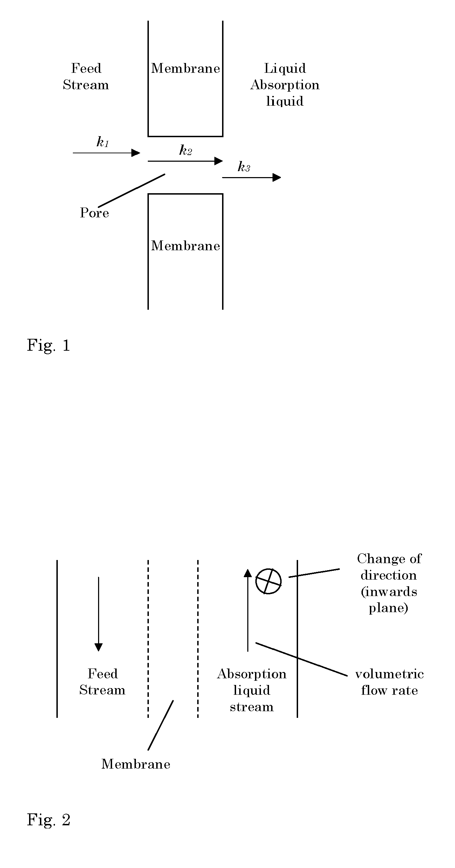

Figure 1 shows a schematic representation of the mechanism underlying the transfer of a compound from the feed stream through the membrane to the absorption liquid. This transfer can be regarded as a process comprising three steps: a first step (1), in which the compound is transferred from the feed stream into the non-selective porous membrane, a second step (2), in which the compound diffuses through the pores of the membrane, and a third step (3), in which the compound is absorbed by the absorption liquid (absorption step). Thus, the overall mass transfer rate ($k_{ov}$) can be expressed as a combination of the rates of each of these three steps ($k_1$, $k_2$, $k_3$) by the following formula:

$$1/k_{ov} = 1/k_1 + 1/k_2 + 1/k_3 \qquad (1)$$

The absorption rate is at least in part dependent on the loading of the absorption liquid. Loading herein is defined as the number of molecules already absorbed by the absorption liquid per molecule absorbent present in the absorption liquid (*e.g.* in mol/mol). When the absorption liquid is lean in the compound to be absorbed (*i.e.* low loading), the absorption rate will be high compared to the same absorption liquid being rich in the compound to be absorbed (*i.e.* high loading). Therefore, to facilitate absorption, it is desirable that the loading of the absorption liquid, in particular the loading of the absorption liquid near the membrane, is low. This means that it is very important that there is a high driving force in the liquid phase, because this is generally the limiting factor. As used herein, "absorption liquid near the membrane" is defined as that part of the absorption liquid that has a close enough distance to the membrane to influence the absorption rate through said membrane, *e.g.* a distance that is as close to zero as possible, preferably zero, typically less than several tens of μm, *e.g.* 0-10 μm.

One way of providing for a low local loading of the absorption liquid near the membrane is using a high superficial velocity of the absorption liquid near the membrane. As used herein, superficial velocity is the local velocity of the absorption liquid at a specific place in the process, *e.g.* near the membrane. When contacting the membrane with a still absorption liquid, the loading near the membrane will become temporarily much higher than the average loading of the absorption liquid. By using a high velocity for the absorption liquid near the membrane, any compounds absorbed by the absorption liquid will be quickly transported away from the membrane pores, thus keeping the loading near the membrane pores low. In between pores, the absorbed compounds will be distributed more evenly over the absorption liquid through diffusion and, optionally, mixing of the absorption liquid, resulting in the membrane pores being mainly in contact with lean absorption liquid. Thus, a high superficial velocity of the absorption liquid near the membrane allows for a low local loading of the absorption liquid near the membrane pores, resulting in a high absorption rate.

The absorption liquid in the method of the invention preferably has for at least part of its residence time near the membrane a superficial velocity near the membrane that is as high as possible, preferably at least a velocity corresponding to a Reynolds number (Re) at which turbulent flow commences, *viz.* typically Reynolds numbers above 3000, preferably above 4000.

A simple way of providing for a high superficial velocity of the absorption liquid near the membrane is using a high volumetric flow of the absorption liquid rate near the membrane. The volumetric flow rate as used herein is the volume of absorption liquid that passes through the membrane absorption system per unit time (*e.g.* in m³/s), wherein said volume is at least in part in contact with the membrane. The volumetric flow rate is typically determined by the pump speed with which the absorption liquid is pumped through the membrane absorption system.

However, using a high volumetric flow rate for the absorption liquid can have a number of disadvantages. For example, a high volumetric flow rate increases the risk of damaging the membrane and other parts of the absorption system. In addition, using a high volumetric flow rate for the absorption liquid results in the average velocity of the absorption liquid being high and thus the residence time of the absorption liquid on the membrane being short. A short residence time of the absorption liquid on the membrane is disadvantageous, because the absorption capacity of the absorption liquid is in such a case only partially exploited.

The present invention provides for a membrane absorption process in which the absorption liquid has a high superficial velocity near the membrane, without having to use a high volumetric flow rate for the absorption liquid. This is achieved by changing the flow direction of the absorption liquid for a duration less than τ. Preferably, the change of said direction of said absorption liquid is a reversal of the flow.

In at least most membrane absorption set-ups in the prior art, the average velocity with which the absorption liquid passes the membrane is mainly determined by the volumetric flow rate of the absorption liquid. Based on the average velocity, an estimate can be made of the superficial velocity near the membrane, further taking into account factors such as *e.g.* boundary layer effects and viscosity of the absorption liquid. An estimate of the average velocity of the absorption liquid can usually be made by dividing the volumetric flow rate of the absorption liquid by the surface area through which the absorption liquid flows. For example, when an absorption liquid is pumped through a membrane tube having a diameter of 1 mm and a volume of 0.02 ml with a pump speed of 0.1 ml/s, the volumetric flow rate is 0.1 ml/s or $1 \cdot 10^{-7}$ m³/s and the surface area through which the absorption liquid flows is $\pi \cdot (0.5 \cdot 10^{-3})^2 = 7.9 \cdot 10^{-7}$ m². The estimate of the average velocity of the absorption liquid can then be calculated by $1 \cdot 10^{-7} / 7.9 \cdot 10^{-7} = 0.13$ m/s.

The present invention does not make use of a typical membrane absorption set-up in that the superficial velocity of the absorption liquid is typically much larger than would be expected based on the average velocity of the absorption liquid as estimated by the calculations described hereinabove. More specific, according to the present invention, the absorption liquid typically has for at least part of its residence time a superficial velocity near the membrane that is higher than would be expected based on the volumetric flow rate of the absorption liquid.

According to the present invention, the flow direction of the absorption liquid is changed for a duration less than τ to achieve an improved mass transfer. When using the present invention in the above example of the membrane tube, the flow direction could for example be reversed for a duration less than τ. Such a change in flow direction would result in a lower volumetric flow rate, *e.g.* 0.08 ml/s. In the case that $\varphi_v = 0.08$ ml/s, said certain duration should be less than τ, with τ being less than $V/\varphi_v = 0.02 / 0.08 = 0.25$ s.

Preferably, the total duration of changed flow of the absorption liquid during its residence time in the membrane unit comprises one or more periods of changed flow with a duration of preferably 0.5 - 3.5 s, more preferably 2 - 3 s.

Preferably, the absorption liquid according to the method of the invention has a changed flow direction for 5% - 49% of its residence time in the membrane unit, *i.e.* $0.05\tau$ - $0.49\tau$, more preferably 20% - 49% of its residence time in the membrane unit, *i.e.* $0.2\tau$ - $0.49\tau$, even more preferably 35% - 45% of its residence time in the membrane unit, *i.e.* $0.35\tau$ - $0.45\tau$.

A disadvantage of using the method according to the invention is that changing the direction of the absorption liquid costs energy. In addition, changing the direction of the absorption liquid stream may result in frequent pressure drops, which also costs energy. However, the inventors surprisingly found that the increase in mass transfer outweighs these additional energy costs.

The changed flow direction and the direction of the volumetric flow rate may be directed along different axes. For example, the change in direction may be perpendicular to the direction of the volumetric flow rate (see figure 2). Preferably, the changed flow direction and the volumetric flow rate are both directed along the same axis.

The pump used to provide the change in flow direction of the absorption liquid according to the method of the invention may be for example a piston pump or a pumpjack. Alternatively, use can be made of a regular pump, such as a gear pump or a centrifugal pump, in combination with valves to create different flow routes for the absorption liquid stream.

The absorption liquid may have a pulsating movement while flowing through said absorption liquid compartment, wherein said pulsating movement is defined as a movement comprising at least two stages: a first stage (s1), in which the absorption liquid flows in a first direction in said absorption liquid compartment, and a second stage (s2), in which the absorption stream flows in a direction opposite to said first direction in said absorption liquid compartment. Preferably, the two stages $s_1$ and $s_2$ are part of a periodic movement.

Because the movement of the absorption liquid in $s_1$ at least partially cancels out the movement of the absorption liquid in $s_2$, at least part of a pulsating movement does not contribute to the volumetric flow rate. Therefore, an absorption liquid having a pulsating movement has a superficial velocity, *e.g.* a superficial velocity near the membrane, that is higher than would be expected based on the volumetric flow rate of the absorption liquid.

The average speed, *i.e.* the absolute value of the average velocity, of the absorption liquid in the first stage ($v_1$) may be the same or different than the average speed of the absorption liquid in the second stage ($v_2$). Furthermore, the duration of the first stage ($t_1$) may be the same or different than the duration of the second stage ($t_2$). Preferably, the pulsating movement is perpendicular to the direction of the compound transfer through the membrane.

The duration of the first stage is preferably 1 - 4 s, more preferably 2 - 3 s. Preferably, the duration of the first stage is preferably 1 to 2 times, more preferably 1.2 to 1.6 times the duration of the second stage.

The pulsating movement may be perpendicular to the direction of the volumetric flow rate speed (see figure 2). In this case, the duration of the first and second stage of the pulsating movement is preferably the same.

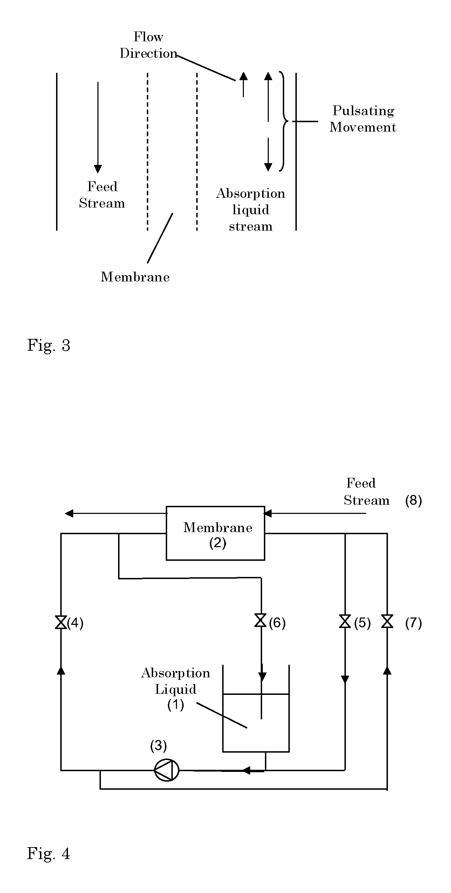

Preferably, the pulsating movement and the volumetric flow rate are both directed along the same axis (see figure 3). In this case, the contribution of the pulsating movement to the volumetric flow rate speed is maximized, which is energetically favorable.

More preferably, the volumetric flow rate is mainly determined by the pulsating movement (except for small forces such as frictional forces). This has the advantage that only one pump may be used for the method of the invention. In this case, the volumetric flow rate is mainly determined by the duration of each stage of the pulsating movement.

A schematic representation of a preferred embodiment of the present invention is given in figure 4. The embodiment makes use of one pump in combination with four valves, which valves provide for two different streaming routes for the absorption liquid stream. The feed stream (8) is fed to the feed stream compartment of membrane unit (2). The absorption liquid (1) is fed to the absorption liquid compartment of membrane unit (2) using pump (3). The route through which the absorption liquid is pumped through the membrane is dependent on valves (4) to (7). The direction of the absorption liquid stream is continuously switched by alternating between a first stage, in which valves (4) and (5) are open and valves (6) and (7) are closed and a second stage, in which valves (4) and (5) are closed and valves (6) and (7) are open. By choosing different durations for the first and the second stage, the absorption liquid stream is pumped along the membrane of membrane unit (2), wherein the duration of at least one of the two stages is smaller than the residence time of the absorption liquid in membrane unit (2).

An additional way of keeping the local loading of the absorption liquid near the membrane pores low is by mixing of the absorption liquid. Without mixing, the compound transfer may result in a very high local loading of the absorption liquid near the membrane pores. Mixing the absorption liquid stream allows for a more even distribution of the absorbed compounds over the absorption liquid stream and consequently keeping the local loading near the membrane pores low.

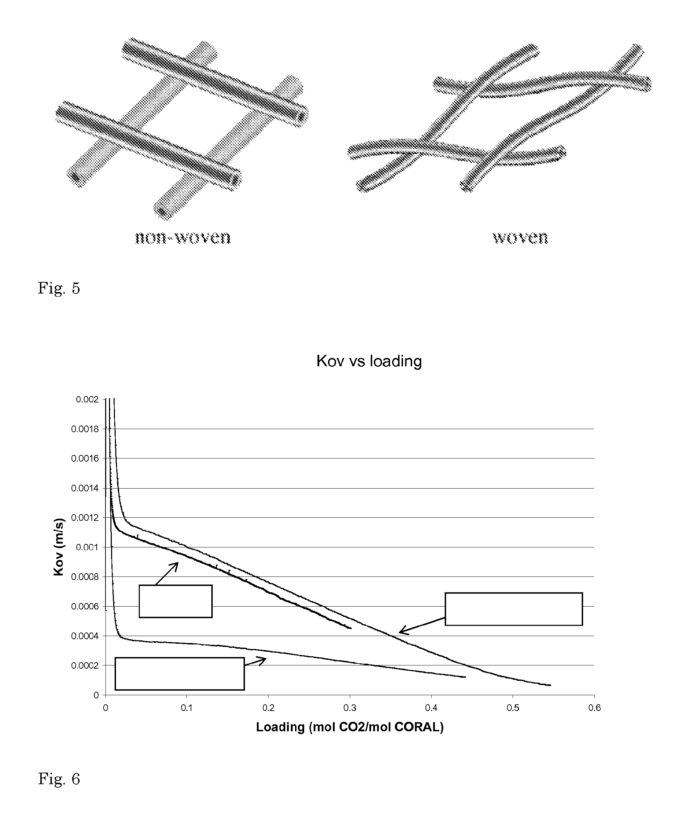

In the method of the invention, the absorption liquid may be passed through static mixers, as for example shown in figure 5, while being in contact with the membrane. This will ensure the absorption liquid stream of being well mixed (typically turbulent instead of laminar), which may improve mixing. Preferably the absorption liquid is fed under such conditions that turbulent flow is obtained, viz. Re is typically larger than 3000 to 4000. A disadvantage of passing the absorption liquid through a static mixer while being in contact with the membrane is that the presence of a static mixer may reduce the contact area of the absorption liquid stream with the membrane. However, it was found that the benefits of improved mixing outweigh this disadvantage.

Preferably, double-layered spacer material (see figure 5) is used as a static mixer, of which an example is shown in figure 5. This material forces the absorption liquid stream to flow over the membrane in a weaving motion resulting in turbulent flow. The double-layered spacer material may either be woven or non-woven. Thus spacers result in separation of membrane sheets if multiple membranes are used. Also the spacers will contribute to turbulent flow. Usually the spacer material is of limited compressibility to ensure good fixation of the setup.

The membrane used in the present invention is preferably a non-selective gas-permeable microporous hydrophobic membrane. As used herein, the term "non-selective" is directed to non-selectivity regarding chemical gas compounds (*e.g.* $CO_2$, $N_2$, *etc.*) and not regarding the physical state of any chemical compound (*e.g.* gas phase, liquid phase, solid phase).

The membranes as applied in the present invention may have any suitable size and shape, such as tubular membranes and flat sheets, or sheets that are configured in a certain fashion, *e.g.* spirally wound up. Different terms may be employed to describe tubular membranes (*viz.* membranes having the shape of a tube), depending in particular on their diameter (see for instance "Nomenclature and symbols in membrane science and technology", G.H. Koops, Sept. (1995)"). Hollow fibre membranes are typically tubular membranes having diameter < 1.5 mm. Capillary membranes are typically tubular membranes having a diameter of 1.5 to 5 mm. Tubular membranes having a diameter > 5 mm are often simply referred to as membrane tubes. All of these tubular membranes can be used in accordance with the present invention.

The feed stream may be either a gaseous feed stream (Membrane Gas Absorption; MGA) or a liquid feed stream (pertraction). An example of MGA is the removal of $CO_2$ from flue gases.

When using an aqueous absorption liquid in MGA, the non-selective gas-permeable porous membrane should be hydrophobic. Thus, liquid water is unable to pass through the hydrophobic membrane, while gas molecules can pass through the membrane. Using a hydrophilic membrane in combination with aqueous liquids would result in pore wetting, which may result in the membrane becoming impermeable. Consequently, when using an organic absorption liquid stream in MGA, the non-selective porous membrane should be hydrophilic.

In case of pertraction, the surface tension of at least one of the liquids is so high that pore wetting cannot occur. For example, the first liquid may penetrate through the membrane, whereas the absorption liquid will not. As a result both hydrophilic and hydrophobic membranes can be used.

The absorption liquid may be any liquid mixture or solution that is suitable for absorbing the desirable compound. For example, the absorption liquid may be an aqueous solution comprising amines and/or amino acids. Such an absorption liquid is very suitable for absorbing $CO_2$.

Example:

The present invention will be illustrated by the following example. A membrane absorption set-up was used as depicted in Fig. 3. The following conditions were used for all experiments. The feed stream used was a $CO_2$ containing gas stream. The feed stream was passed over a hydrophobic non-selective gas-permeable membrane with a gas speed of 250 l/hr. An aqueous solution comprising amines was used as the absorption liquid. The volume of the absorption liquid compartment of the used membrane unit was 500 ml.

A first experiment (Experiment 1) was done in which valves 4 and 5 were constantly open and valves 6 and 7 were constantly closed. A pump speed of 150 ml/min was used, corresponding to a volumetric flow rate speed of 150 ml/min. In this experiment, $\tau = V/\varphi_V = 500/150 = 3.33$ min.

This experiment was repeated (Experiment 2) with a pump speed of 1000 ml/min, corresponding to a volumetric flow rate of 1000 ml/min. In this experiment, $\tau = V/\varphi_V = 500/1000 = 050$ min.

A third experiment (Experiment 3) was done using two alternating stages: a first stage with a duration of 3.66 s, in which valves (4) and (5) were closed and valves (6) and (7) were open; and a second stage with a duration of 2.60 s, in which valves (4) and (5) were open and valves (6) and (7) were closed. A pump speed of 1000 ml/min was used. The two stages were alternated for a total time of several hours. Thus, a volumetric flow rate was obtained of 150 ml/min. In this experiment, $\tau = V/\varphi_V = 500/150 = 3.33$ min.

The $k_{ov}$ was calculated for each experiment by measuring the $CO_2$ concentrations in the feed stream before and after passing the membrane. The difference of these two concentrations was used to calculate the amount of $CO_2$ captured by the absorption liquid (local loading of the absorption liquid near the membrane) over time.

Figure 6 shows a graph with the results of the three experiments. These results show that by increasing the volumetric flow rate of the absorption liquid, and thus the superficial velocity of the absorption liquid near the membrane, a higher overall absorption rate is obtained (compare Experiment 1 and Experiment 2).

The overall absorption rates in Experiment 2 and Experiment 3 are about the same. These two experiments used the same amount of energy, *viz.* a pump speed of 1000 ml/min. However, the amount of absorption liquid used in Experiment 3 is much lower compared to Experiment 2, viz. 150 ml/min in Experiment 3 versus 1000 ml/min in Experiment 2. Thus it is shown that by using the method of the invention, the amount of absorption liquid used can be significantly reduced.

When comparing Experiment 3 to Experiment 1, the same amount of absorption liquid is used for both experiments, viz. 150 ml/min. However, Experiment 3 has a significant better overall absorption rate.

**Claims**

1. Method for transferring at least one compound from a feed stream to an absorption liquid stream comprising:

   - feeding said feed stream to a feed stream compartment of a membrane unit;
   - feeding said absorption liquid stream to an absorption liquid compartment of said membrane unit;
   - wherein in said membrane unit said feed stream compartment and said absorption liquid compartment are separated by a membrane;
   - wherein said absorption liquid flows through said absorption liquid compartment in a direction that is essentially parallel to said membrane;
   - wherein the residence time of said absorption liquid in said membrane unit is $\tau$; wherein $\tau = V/\varphi_v$, wherein V is the volume of said absorption liquid compartment and $\varphi_v$ is the volumetric flow rate of said absorption liquid stream; and
   - wherein for a duration less than $\tau$ the flow direction of said absorption liquid is changed.

2. Method according to claim 1, wherein said absorption liquid has for at least part of its residence time a superficial velocity near said membrane that is higher than would be expected based on the volumetric flow rate of said absorption liquid.

3. Method according to any of the previous claims, wherein the change of said direction of said absorption liquid is a reversal of the flow.

4. Method according to any of the previous claims, wherein the absorption liquid has for at least part of its residence time a superficial velocity of at least 0.1 m/s, more preferably 0.2 m/s.

5. Method according to any of the previous claims, wherein the absorption liquid has an average velocity near the membrane of 0.001- 0.1 m/s, preferably 0.01 - 0.05.

6. Method according to any of the previous claims, wherein the total duration of changed flow of said absorption liquid during said residence time in said membrane unit comprises one or more periods of changed flow with a duration of preferably 0.5 - 3.5 s, more preferably 2 - 3 s.

7. Method according to any of the previous claims, wherein said absorption liquid has a changed flow direction for $0.05\tau - 0.49\tau$, more preferably $0.2\tau - 0.49\tau$, even more preferably $0.35\tau - 0.45\tau$.

8. Method according to any of the previous claims, wherein the absorption liquid is passed through static mixers while being in contact with said membrane.

9. Method according to claim 8, wherein double-layered spacer material is used as a static mixer.

10. Method according to any of the previous claims, wherein said absorption liquid is an aqueous solution comprising amines and/or amino acids.

11. Method according to any of the previous claims, wherein said feed stream is a gaseous feed stream.

12. Method according to any of the previous claims, wherein said compound is $CO_2$.

13. Method according to any of the previous claims, wherein said absorption liquid has a pulsating movement while flowing through said absorption liquid compartment, wherein said pulsating movement is defined as a movement comprising at least two stages: a first stage ($s_1$), in which the absorption liquid flows in a first direction in said absorption liquid compartment, and a second stage ($s_2$), in which the absorption liquid stream flows in a direction opposite to said first direction in said absorption liquid compartment.

14. Method according to any of claims 13, wherein the duration of the first stage is 1 - 2 times, preferably 1.1 - 2 times the duration of the second stage.

15. Method according to any of claims 13 or 14, wherein the duration of the first stage is 1 - 4 s, preferably 2 - 3 s.

Fig. 1

Fig. 2

Fig. 3

Fig. 4

non-woven        woven

Fig. 5

Kov vs loading

Fig. 6

Europäisches
Patentamt

European
Patent Office

Office européen
des brevets

# EUROPEAN SEARCH REPORT

Application Number

EP 09 15 8751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GALLETTI ET AL.: "Development of an implantable booster lung" TRANS. AM. SOC. ARTIF. INTERN. ORGANS, vol. xxvi, 1980, pages 573-577, XP008111276 | 1-7, 11-15 | INV. B01D65/08 B01D61/24 |
| Y | * the whole document * | 8-10 | |
| X | BELLHOUSE ET AL.: "A High efficiency membrane oxygenator and pulsatile pumping system and its application to animal trials" TRANS. AMER. SOC. ARTIF. INT. ORGANS, vol. xix, 1973, pages 72-79, XP008111277 | 1-8, 11-15 | |
| Y | * the whole document * | 9 | |
| Y | US 2006/231492 A1 (SABOTTKE CRAIG Y [US]; MATRAGRANO JOHN G [US]) 19 October 2006 (2006-10-19) * paragraph [0014] * * paragraph [0031] * * paragraph [0083] * | 8-9 | |
| Y | GB 1 063 517 A (EICKMEYER ALLEN GARLAND) 30 March 1967 (1967-03-30) * claims 1, 7-8 * | 10 | TECHNICAL FIELDS SEARCHED (IPC) B01D |

The present search report has been drawn up for all claims

| Place of search | Date of completion of the search | Examiner |
|---|---|---|
| The Hague | 1 September 2009 | Veríssimo, Sónia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 15 8751

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2009

| Patent document cited in search report | | Publication date | Patent family member(s) | Publication date |
|---|---|---|---|---|
| US 2006231492 | A1 | 19-10-2006 | NONE | |
| GB 1063517 | A | 30-03-1967 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005028085 A


**Non-patent literature cited in the description**

- **Krantz et al.** *Journal of Membrane Science,* 1997, vol. 124, 283-299

- **G.H. Koops.** *Nomenclature and symbols in membrane science and technology,* September 1995